# EUROPEAN PATENT SPECIFICATION

(11) **EP 3 594 779 B1**
(45) Date of publication and mention of the grant of the patent: **25.06.2025**
(21) Application number: 18201287.2
(22) Date of filing: 18.10.2018
(51) Int. Cl.: G06F 1/20, H05K 7/20

(54) **METHOD FOR CONTROLLING FAN IN ELECTRONIC SYSTEM**
VERFAHREN ZUR STEUERUNG DES LÜFTERS IN EINEM ELEKTRONISCHEN SYSTEM
PROCÉDÉ DE COMMANDE DE VENTILATEUR DANS UN SYSTÈME ÉLECTRONIQUE

(30) Priority: 09.07.2018 US 201816030251
(43) Date of publication of application: 15.01.2020
(73) Proprietor: Quanta Computer Inc., Taoyuan City 33377 (TW)
(72) Inventor: LI, Yung-Fu, Taoyuan City 33377 (TW)
(74) Representative: dompatent von Kreisler Selting Werner - Partnerschaft von Patent- und Rechtsanwälten mbB

(56) References cited:
- US-A1- 2004 130 868
- US-A1- 2014 142 764

## Description

### FIELD OF THE INVENTION

The present invention relates to cooling fans, and more specifically, to the control of a cooling fan in response to the lack of a control signal.

### BACKGROUND

Fans are often required in various electronic systems that generate heat to cool the systems. The speed of the fan typically is controlled by a fan speed control circuit. For example, in computer systems, such as server systems, there often is a baseboard management controller (BMC) that generates a fan speed control signal. The fan speed control signal is then sent to a fan controller within a fan module. The fan controller dynamically controls the fan speed based on the fan speed control signal to cool the computer system, in addition to saving power consumption and reducing noise.

In the event that the hardware, firmware, or software of the fan speed control circuit fails (for example, in the BMC), the fan may stop altogether, or keep running at a constant speed that is insufficient for cooling the electronic system. This can lead to the electronic system hanging due to overheating. In a worst case scenario, improper fan speed control can even lead to permanent damage to the system.

Accordingly, there is a need for devices and methods that overcome the foregoing drawbacks.

In US 2014/142764 A1, a fan rotational speed control system is disclosed. The system is operable to control at least a fan and includes a baseboard management controller, a complex programmable logic device and a switching circuit. The baseboard management controller of the described system is operable to output a fan pulse wave signal and a Heart bit. The complex programmable logical device is operable to receive the Heart bit and to determine whether the baseboard management controller is upnormal based on the Heart bit.

In addition, in US 2004/130868 A1, a cooling system with redundant fan controllers is described. The cooling system comprises a first fan controller coupled to control a first plurality of fans and a second fan controller coupled to control a second plurality of fans. During the operation of the described cooling system, the first plurality of fans and the second plurality of fans operate concurrently. The first fan controller and the second fan controller are each configured to monitor the first and the second plurality of fans and detect a failure in the first and the second plurality of fans.

### SUMMARY

In order to solve the above-mentioned problem, an electronic system and a corresponding method of controlling a fan within the electronic system as defined in the independent claims are suggested. Further preferred embodiments of the present invention are defined in the dependent claims. The various embodiments concern devices and methods for controlling a fan in the event of an abnormality in the normal control of the fan.

The various embodiments further concern a heartbeat signal that is monitored by a fan controller. In the event of a discrepancy in the heartbeat signal, the fan controller assumes control over the fan.

### BRIEF DESCRIPTION OF THE DRAWINGS

The disclosure, and its advantages and drawings, will be better understood from the following description of exemplary embodiments together with reference to the accompanying drawings. These drawings depict only exemplary embodiments, and are therefore not to be considered as limitations on the scope of the various embodiments or claims.
FIG. 1 illustrates a schematic view of an electronic system for controlling a fan module with a heartbeat signal, according to aspects of the present disclosure.
FIG. 2 illustrates a process for controlling a fan module within an electronic system, according to aspects of the present disclosure.
FIG. 3 illustrates a process for setting a safe fan speed, according to aspects of the present disclosure.
FIG. 4 illustrates a process for controlling a fan module for cooling a computer system, according to aspects of the present disclosure.

### DETAILED DESCRIPTION

The various embodiments are described with reference to the attached figures, where like reference numerals are used throughout the figures to designate similar or equivalent elements. The figures are not drawn to scale, and they are provided merely to illustrate the instant invention. It should be understood that numerous specific details, relationships, and methods are set forth to provide a full understanding. One having ordinary skill in the relevant art, however, will readily recognize that the various embodiments can be practiced without one or more of the specific details, or with other methods. In other instances, well-known structures or operations are not shown in detail to avoid obscuring certain aspects of the various embodiments. The various embodiments are not limited by the illustrated ordering of acts or events, as some acts may occur in different orders and/or concurrently with other acts or events.

To that extent, elements and limitations that are disclosed, for example, in the Abstract, Summary, and Detailed Description sections, but not explicitly set forth in the claims, should not be incorporated into the claims, singly, or collectively, by implication, inference, or otherwise. For purposes of the present detailed description, unless specifically disclaimed, the singular includes the plural and vice versa. The word "including" means "including without limitation." Moreover, words of approximation, such as "about," "almost," "substantially," "approximately," and the like, can be used herein to mean "at," "near," or "nearly at," or "within 3-5% of," or "within acceptable manufacturing tolerances," or any logical combination thereof, for example.

The present disclosure describes devices and methods that include a heartbeat signal generated by a fan speed control circuit. The heartbeat signal is monitored by a fan controller within a fan module. When the fan controller detects that the heartbeat signal has stopped, or detects any other type of discrepancy indicating an abnormality, the fan controller takes over control of the fan speed. Specifically, the fan controller operates the fan at a safe fan speed to keep the system associated with the fan cool despite the abnormality.

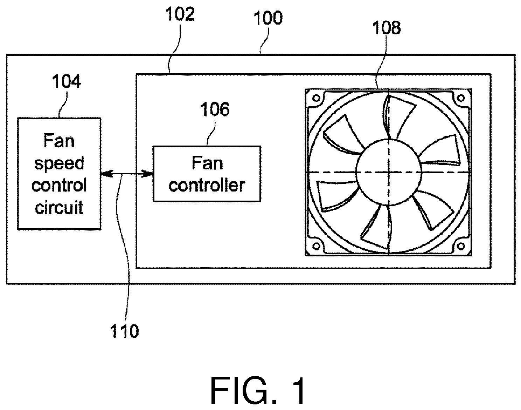

FIG. 1 illustrates a schematic view of an electronic system 100 for controlling a fan module 102 with a heartbeat signal, according to aspects of the present disclosure. Although the present disclosure is primarily directed to computer systems, such as server systems, the electronic system 100 can be within any type of system that generates heat during use and that uses a fan to dissipate the heat. Moreover, the electronic system 100 of FIG. 1 can be for the entire system. For example, the electronic system 100 can be an overall server system, and the fan 108 (described below) can be for cooling the overall system. Alternatively, the electronic system 100 of FIG. 1 can be a component electronic system within a larger system. For example, the electronic system 100 can be a power unit, a graphics processing component, a central processing component, or the like within a computer system; and the fan 108 (described below) can be for cooling the specific component.

The electronic system 100 includes the fan module 102 and a fan speed control circuit 104. The fan module 102 includes a fan controller 106 and a fan 108. The fan speed control circuit 104 is separate from the fan module 102. In the context of computer systems, the fan speed control circuit 104 can be located on the motherboard. The fan speed control circuit 104 has access to and monitors one or more parameters of the electronic system 100. The parameters relate to the heat that is generated within the electronic system 100. From the parameters, the fan speed control circuit 104 determines the amount of cooling needed for the system 100. Based on the amount of cooling needed, the fan speed control circuit 104 generates a fan speed control signal. In the context of a server system, the fan speed control circuit can be a BMC. The BMC monitors parameters of the server system that relate to how much heat is being generated, and translates that information into the generated fan speed control signal. For example, the parameters can be processor, memory, and/or internal chassis temperatures. The fan speed control circuit 104 can generate the fan speed control signal based on hardware, firmware, software, or a combination thereof. The fan speed control signal can be any type of digital or analog signal. In one or more embodiments, the fan speed control signal can be a pulse width modulation signal.

The fan speed control circuit 104 is communicatively connected to the fan controller 106 of the fan module 102 via a connection 110. The connection 110 is one wired connection. The fan speed control circuit 104 communicates the fan speed control signal to the fan controller 106 via the connection 110. In response to the fan speed control signal, the fan controller 106 operates the fan 108 at the instructed speed.

In one or more embodiments, the fan controller 106 can generate a fan operation signal and communicate the fan operation signal back to the fan speed control circuit 104. The fan operation signal can verify that the fan 108 is operating as instructed by the fan speed control circuit 104. In one or more embodiments, the fan operation signal can be a tachometer signal that reports the number of revolutions of the fan. Based on the number of revolutions, the fan speed control circuit 104 can verify that the fan 108 is operating at the appropriate speed or duty cycle.

According to the present disclosure, the fan speed control circuit 104 also generates a heartbeat signal and transmits the heartbeat signal to the fan controller 106. The heartbeat signal indicates normal operation of the fan speed control circuit. The fan controller 106 can then monitor for the heartbeat signal to determine whether there is any abnormality with the fan speed control circuit 104, or any other component of the electronic system 100 that may be affecting the fan speed control circuit 104. The heartbeat signal can be a continuous or periodic signal. According to the present invention, the heartbeat signal is transmitted (embedded) within the fan speed control signal or can be transmitted as a separate signal. In one or more embodiments, the heartbeat signal can be transmitted over the same wired and/or wireless connection as the fan speed control signal and/or fan operation signal. According to the present invention, the heartbeat signal can be transmitted over a different wired or wireless connection than the fan speed control signal and the tachometer signal.

For example, in one embodiment, the connection 110 can be a five-pin general purpose output pin connection. Two of the five pins can provide a common ground and a voltage supply (e.g., a nominal + 12 Volts) to the fan module 102. The third pin can provide the fan speed control signal to the fan controller 106. The fourth pin can provide the fan operation signal from the fan controller 106 back to the fan speed control circuit 104. The fifth pin can be added to provide the heartbeat signal from the fan speed control circuit 104 to the fan controller 106.

However, in one or more embodiments, the connection 110 can vary from being a five-pin connection. For example, the connection 110 can be a four-pin connection, and the heartbeat signal can be provided via one of the other four pins. In one embodiment, the heartbeat signal can be a specific, periodic pulse-width modulation within the fan speed control signal that does not affect the speed of the fan; or negligibly affects the speed of the fan. For example, the specific, periodic pulse-width modulation can be a short positive (or negative) square wave immediately followed by a short negative (or positive) square wave that occurs according to a specific period. In which case, the two waves effectively negate each other with respect to changing the speed of the fan. However, the fan controller 106 can monitor for the specific, periodic pulse-width modulation within the fan speed control signal as the heartbeat signal. In such embodiments, a conventional connection between the fan speed control circuit 104 and the fan controller 106 can be used without having to add a fifth pin. However, other types of connections for the connection 110 are possible than those described above. Such other connections include, for example, a platform environment control interface (PECI) bus, an inter-integrated circuit (I²C) bus, and the like. In the case of the PECI bus and the I²C bus, the safe fan speed signal can be a command sent from the fan speed control circuit 104 to the fan controller 106.

The generation and transmittal of the heartbeat signal from the fan speed control circuit 104 to the fan controller 106 indicates that the electronic system 100 is operating normally with respect to control of the fan 108. Accordingly, the fan controller 106 within the fan module 102 monitors for a discrepancy in the heartbeat signal. A discrepancy can be the lack of the continuous heartbeat signal, the lack of the heartbeat signal during one period, or the lack of the heartbeat signal during two or more sequential or non-sequential periods.

When the fan controller 106 detects a discrepancy in the heartbeat signal, the fan controller 106 takes over control of the speed of the fan 108 from the fan speed control circuit 104. When the fan controller 106 takes over control of the fan 108, the fan controller 106 can operate the fan 108 at a safe fan speed. In one or more embodiments, the safe fan speed can be full speed to provide maximum cooling. In one or more embodiments, the safe fan speed can less than full speed. In one or more embodiments, the safe fan speed can be a default speed set within logic of the fan controller 106 that cannot be changed. Alternatively, in one or more embodiments, the safe fan speed can be set by the fan speed control circuit 104 any time before the discrepancy, such as at startup or reset of the fan speed control circuit 104 or the electronic system 100. The fan speed control circuit 104 can send the safe fan speed via the heartbeat signal, the fan speed control signal, or any other signal during operation. Thus, in the event of an issue with the fan speed control circuit 104 controlling the fan 108 through the fan controller 106, the heartbeat signal can prevent or reduce the likelihood of the electronic system 100 hanging or being damaged as a result of improper fan speed control. Instead, the fan controller 106 can assume control of the fan speed to maintain cooling within the system 100.

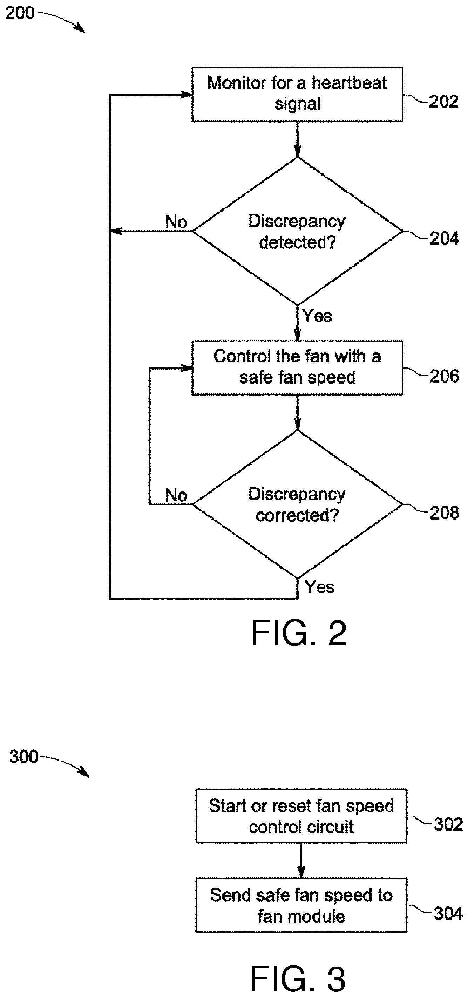

FIG. 2 illustrates a process 200 for controlling a fan within an electronic system, according to aspects of the present disclosure. The process 200 can be performed by the fan speed control circuit 104 and the fan controller 106 disclosed above (FIG. 1). The electronic system can be any electronic system, such as the electronic system 100, including a computer system, a sub-component within a computer system, or any other electronic system that uses a fan to dissipate generated heat. The process 200 begins at step 202, where a fan controller of a fan module monitors for a heartbeat signal. During normal operation, a fan speed control circuit that monitors parameters that correspond to the amount of heat generated by the electronic system generates the heartbeat signal. The heartbeat signal indicates normal operation of the electronic system. In one or more embodiments, normal operation of the electronic system includes the fan speed control circuit receiving the expected parameters used to generate a fan speed control signal. In one or more embodiments, normal operation also includes values of the parameters being within expected and/or predetermined ranges, such as normal operating conditions. Normal operation also includes the fan speed control circuit generating and outputting the fan speed control signal to the fan controller according to a predetermined scheme, such as continuously or periodically. The fan module can be associated with the cooling of any electronic system, such as a computer system or a component within a computer system. The heartbeat signal can be continuous or periodic. In one or more embodiments, the heartbeat signal can be a high/low toggling signal, a command/data signal, or a combination thereof.

At step 204, the fan controller of the fan module determines whether a discrepancy exists in the heartbeat signal. The discrepancy can be the lack of the fan speed control signal. For example, with a continuous fan speed control signal, the discrepancy can be the fan controller no longer receiving the signal. As another example, with a periodic fan speed control signal, the discrepancy can be the fan controller not receiving the signal for one period, or not receiving the signal for two or more sequential or non-sequential periods. As another example, for a toggling signal and/or a command data signal, the discrepancy can be an incorrect value within the signal. If a discrepancy does not exist, the process 200 loops back to step 202. If a discrepancy exists, the fan controller of the fan module detects a discrepancy in the heartbeat signal based on the monitoring, and the process 200 proceeds to step 206.

At step 206, in response to the fan controller detecting a discrepancy, the fan controller controls the fan according to a safe fan speed. The safe fan speed is configured to keep the fan operating at a speed that attempts to maintain the cooling of the electronic system, despite the lack of proper fan speed control by the fan speed control circuit. In one or more embodiments, the safe fan speed can be a maximum operating speed of the fan (i.e., full speed). In one or more embodiments, the safe fan speed can be less than the maximum operating speed but still a sufficient amount that, on average, should minimize the buildup of heat within the electronic system. For example, in one embodiment, the safe fan speed can be determined based on a worst case thermal simulation (e.g., CPU and memory running at full load), but still be less than full speed. In one embodiment, the safe fan speed can be pre-defined and fixed by thermal or system designer. The safe fan speed can be a default speed set within logic of the fan controller. Alternatively, the safe fan speed can be set by the fan speed control circuit prior to the discrepancy, as discussed further with respect to the process 300 below. For example, the safe fan speed can be the maximum speed which the fan speed control circuit sends to fan controller during normal system operation. The fan controller can record all fan speed requirements from the fan speed control circuit, and then update and keep the maximum speed as the safe fan speed.

In one or embodiments, the process 200 ends after step 206, and the fan controller controls the fan according to the safe fan speed indefinitely, or until power is cut from the fan module, the electronic system, or a combination thereof. In one or more embodiments, the process 200 optionally can proceed to step 208 where the fan controller determines whether the discrepancy in the heartbeat signal has been corrected. If the discrepancy has been corrected, the process 200 loops back to step 202, and the fan controller continues monitoring the heartbeat signal. If the discrepancy has not been corrected, the process 200 loops back to step 206, and the fan controller continues operating the fan according to the safe fan speed.

Based on the process 200, the heartbeat signal can prevent or reduce the likelihood of the electronic system hanging or being damaged as a result of improper fan speed control in the event of an issue with the fan speed control circuit. The fan controller can detect a discrepancy in the control of the fan speed via the heartbeat signal and take over control from the fan speed control circuit. The fan controller assuming control can reduce the likelihood of issues within the electronic system, in response to the buildup of heat.

In one or more embodiments, the fan controller can perform one or more additional or alternative functions in response to detecting a discrepancy in the heartbeat signal. The one or more functions aid in preventing the system from hanging, or being damaged, in response to the fan speed control circuit not being able to control the speed of the fan.

In one embodiment, the fan module can include an audible and/or electronic alarm that is triggered when the fan controller detects a discrepancy in the heartbeat signal. An alarm can alert an operator, technician, or the like, of the discrepancy. In response, the operator, technician, or the like can investigate the issue and take appropriate action, such as shutting the system down and/or manually controlling the fan speed using a switch or other manual control device within the fan module.

In one embodiment, the fan controller can be communicatively coupled to a circuit within the system that allows the fan controller to initiate shutdown of the system. The fan controller shutting the system down further prevents damage to the system caused by the inability to control the fan speed. In one embodiment, the fan controller can communicate to one or more CPUs within the system to reduce the clock speeds of the CPUs to reduce the amount of heat that is generated. In one embodiment, the fan controller can be communicatively coupled to a circuit within the system that allows the fan controller to signal or control the system or other key components (e.g., memory modules (e.g., dual in-line memory modules or DIMMs), a network interface controller (NIC), a storage module, or other components) to slow down or reduce heat.

FIG. 3 illustrates a process 300 for setting a safe fan speed within an electronic system, according to aspects of the present disclosure. The process begins at step 302, where the fan speed control circuit starts or resets, and begins generating and transmitting the fan speed control signal to the fan module. As described above, the fan speed control circuit monitors parameters of the electronic system associated with heat generation to generate the fan speed control signal. Step 302 can occur when the electronic system, such as the computer system, that includes the fan speed control circuit starts and/or resets.

At step 304, the fan speed control circuit sends the safe fan speed to the fan module. In one or more embodiments, the fan speed control circuit can send the safe fan speed to the fan module via a heartbeat signal, such as the heartbeat signal described in the process 200. In one or more embodiments, the fan speed control circuit can send the safe fan speed via another signal, such as the fan speed control signal. The fan speed control circuit can send the safe fan speed once at startup or after a reset, periodically or on demand, in response to a software, firmware, or hardware request. Thereafter, the fan module will have the safe fan speed stored in logic in the event of a discrepancy in the heartbeat signal. The process 300 can occur before the process 200 has initiated or simultaneously with the process 200, once the fan module and the fan speed control circuit startup.

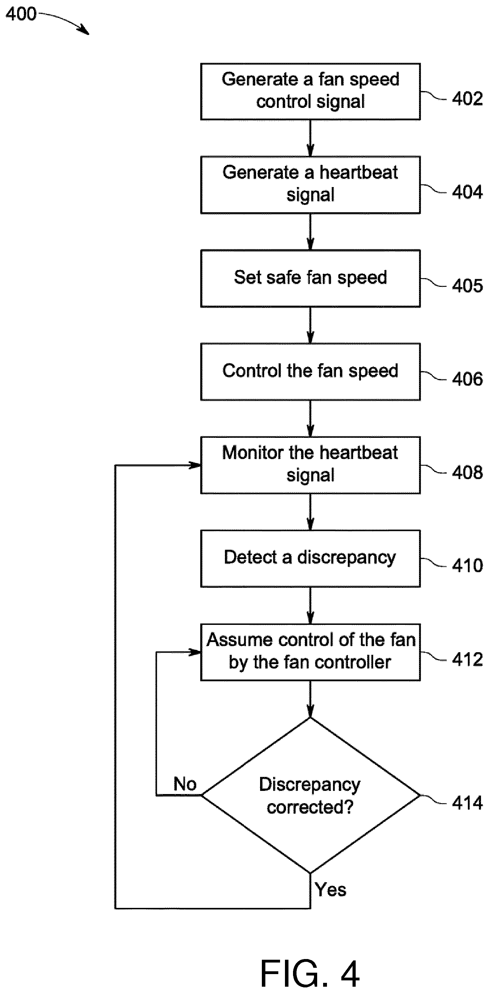

FIG. 4 illustrates a process 400 for controlling a fan module for cooling a computer system, according to aspects of the present disclosure. The process 400 can be performed by the fan speed control circuit 104 and the fan controller 106 disclosed above (FIG. 1). The process 400 begins at step 402, when the fan speed control circuit of the computer system generates a fan speed control signal based on one or more parameters corresponding to heat generated within the computer system. As discussed above, the parameters can relate to, for example, one or more processor temperatures, one or more memory chip temperatures, one or more ambient temperatures within the computer system, or any other temperature associated with the computer system. The parameters can also relate to the amount of power consumed by the computer system, such as by the one or more processors, one or more memory chips, one or more power units, and the like.

At step 404, the fan speed control circuit generates a heartbeat signal. As discussed above, the heartbeat signal indicates normal operation of the fan speed control circuit.

In one embodiment, the process 400 can include step 405, where the fan speed control circuit generates a safe fan speed and transmits the safe fan speed to the fan controller, such as within the heartbeat signal. Alternatively, the fan speed control circuit can transmit the safe fan speed with the fan speed control signal or another signal. Further, although described in relation to step 404, the fan speed control circuit can generate and transmit the safe fan speed to the fan controller at any step or time prior to the step 410, such as when the fan speed control circuit starts or resets.

At step 406, the fan controller of the fan module controls the speed of the fan module based on the fan speed control signal generated and transmitted by the fan speed control circuit. The fan speed control circuit 104 can transmit the fan speed control signal to the fan controller via the connection 110, as described above. For example, the connection 110 can include a general purpose output pin, and the fan speed control circuit 104 can transmit the fan speed control signal via pulse-width modulation over the general purpose output in.

At step 408, the fan controller monitors the heartbeat signal generated and transmitted by the fan speed control circuit. The fan speed control circuit 104 can transmit the heartbeat signal to the fan controller via the connection 110, as described above. According to the present invention, the heartbeat signal is transmitted over the same general purpose output pin as the fan speed control signal. In this case, the heartbeat signal can be embedded within the fan speed control signal. Alternatively, the fan speed control circuit can transmit the heartbeat signal over a separate general purpose output pin of the connection, or any other connection disclosed herein.

At step 410, the fan controller detects a discrepancy in the heartbeat signal based on the monitoring. The discrepancy can be the lack of the heartbeat signal, or any other variation in the heartbeat signal that indicates an abnormality (or potential abnormality) of the fan speed control circuit. For example, the discrepancy can be the lack of a periodic heartbeat signal for one period, or for more than two sequential or non-sequential periods. The discrepancy can be any other discrepancy disclosed above.

At step 412, the fan controller controls the speed of the fan based on a safe fan speed, in place of the fan speed control signal in response to the discrepancy. As disclosed above, the safe fan speed can be full speed for maximum cooling. Alternatively, the safe fan speed can be less than full speed. In one or more embodiments, the safe fan speed can be set in the logic of the fan controller; or can be set based on the fan controller having previously received the safe fan speed from the fan speed control circuit prior to the discrepancy.

At step 414, the fan controller can optionally determine whether the discrepancy in the heartbeat signal has been corrected. The fan controller can perform the determination continuously, periodically, or on demand, such as in response to a software, firmware, or hardware request. If the fan controller determines that the discrepancy in the heartbeat signal has been corrected, the process can loop back to step 408. If the fan controller determines that the discrepancy in the heartbeat signal has not been corrected, the process can loop back to step 412.

Based on the process 400, the computer system can control the fan module for cooling of the system. Further, in the event of an abnormality of the normal control, the lack of the heartbeat signal can prevent or reduce the likelihood of the computer system hanging or damaging one or more components as a result of improper fan speed and temperature control.

While various embodiments of the present invention have been described above, it should be understood that they have been presented by way of example only, and not limitation. Numerous changes to the disclosed embodiments can be made in accordance with the disclosure herein without departing from the scope of the appended claims. Thus, the breadth and scope of the present invention should not be limited by any of the above described embodiments. Rather, the scope of the invention should be defined in accordance with the following claims.

The terminology used herein is for the purpose of describing particular embodiments only and is not intended to be limiting. As used herein, the singular forms "a", "an," and "the" are intended to include the plural forms as well, unless the context clearly indicates otherwise. Furthermore, to the extent that the terms "including", "includes", "having", "has", "with", or variants thereof are used in either the detailed description and/or the claims, such terms are intended to be inclusive in a manner similar to the term "comprising."

Unless otherwise defined, all terms (including technical and scientific terms) used herein have the same meaning as commonly understood by one of ordinary skill in the art to which this invention belongs. Furthermore, terms, such as those defined in commonly used dictionaries, should be interpreted as having a meaning that is consistent with their meaning in the context of the relevant art and will not be interpreted in an idealized or overly formal sense unless expressly so defined herein.

## Claims

1. An electronic system (100) comprising:
a fan speed control circuit (104) configured to generate a heartbeat signal indicating normal operation of the fan speed control circuit (104); and a fan speed control signal; and
a fan module (102) comprising a fan controller (106) and a fan (108),
wherein the fan speed control circuit (104) is communicatively connected to the fan controller (106) of the fan module (102) via a wired connection (110) and is configured to communicate the fan speed control signal and the heartbeat signal to the fan controller (106) via the wired connection (110),
the fan controller (106) being configured to operate the fan (108) at the instructed speed in the fan speed control signal, and
the fan controller being further configured to detect a discrepancy in the heartbeat signal and control the fan (108) according to a safe fan speed, in response to a detected discrepancy,
**characterized in that**
the heartbeat signal is embedded within a fan speed control signal, and the heartbeat signal is transmitted over a same general purpose output pin as the fan speed control signal,
wherein the heartbeat signal is periodic pulse-width modulation within the fan speed control signal, and the discrepancy is a lack of the heartbeat signal during at least one period, during two sequential periods, or during two non-sequential periods.

2. The electronic system of claim 1, wherein the electronic system (100) is a computer system, and the fan speed control circuit (104) is a baseboard management controller.

3. The electronic system of claim 2, wherein the baseboard management controller is configured to set the safe fan speed prior to the fan controller detecting the discrepancy.

4. The electronic system of any of claims 1 to 3, wherein the safe fan speed is less than full speed.

5. The electronic system of any of claims 1 to 4, wherein the safe fan speed is set at startup of the computer system, at reset of the computer system, or both.

6. A method of controlling a fan (108) of an electronic system (100) according to claim 1, the method comprises:
monitoring a heartbeat signal indicating normal operation of the electronic system (100);
detecting a discrepancy in the heartbeat signal; and
controlling the fan (108) according to a safe fan speed in response to the discrepancy.

7. The method of claim 6, wherein the electronic system is a computer system, and the fan speed control circuit (104) is a baseboard management controller.

8. The method of claim 6 or 7, further comprising setting the safe fan speed by the fan speed control circuit (104) prior to detecting the discrepancy.

9. The method of any of claims 6 to 8, wherein the safe fan speed is less than full speed.

10. The method of any of claims 6 to 9, wherein the safe fan speed is set at startup of the computer system, at reset of the computer system, or both.

11. The method of any of claims 6 to 10, further comprising:
determining that the discrepancy in the heartbeat signal has not been corrected and continuing the controlling of the fan according to the safe fan speed, in response to the determination.

## Patentansprüche

1. Elektronisches System (100) mit:
einer Lüfterdrehzahlsteuerschaltung (104), die dazu ausgebildet ist, ein Heartbeat-Signal, das den normalen Betrieb der Lüfterdrehzahlsteuerschaltung (104) angibt, und ein Lüfterdrehzahlsteuersignal zu erzeugen; und
einem Lüftermodul (102), das eine Lüftersteuerung (106) und einen Lüfter (108) aufweist,
wobei die Lüfterdrehzahlsteuerschaltung (104) kommunikationsmäßig mit der Lüftersteuerung (106) des Lüftermoduls (102) über eine Kabelverbindung (110) verbunden ist und dazu ausgebildet ist, das Lüfterdrehzahlsteuersignal und das Heartbeat-Signal an die Lüftersteuerung (106) über die Kabelverbindung (110) zu kommunizieren,
wobei die Lüftersteuerung (106) dazu ausgebildet ist, den Lüfter (108) mit der angewiesenen Drehzahl in dem Lüfterdrehzahlsteuersignal zu betreiben, und
wobei die Lüftersteuerung ferner dazu ausgebildet ist, eine Diskrepanz in dem Heartbeat-Signal zu erkennen und den Lüfter (108) in Reaktion auf eine erkannte Diskrepanz gemäß einer sicheren Lüfterdrehzahl zu steuern,
**dadurch gekennzeichnet, dass**
das Heartbeat-Signal in ein Lüfterdrehzahlsteuersignal eingebettet ist, und das Heartbeat-Signal über denselben Allzweckausgangspin übertragen wird wie das Lüfterdrehzahlsteuersignal,
wobei das Heartbeat-Signal eine periodische Pulsweitenmodulation in dem Lüfterdrehzahlsteuersignal ist, und die Diskrepanz ein Fehlen des Heartbeat-Signals während mindestens einer Periode, während zweier aufeinanderfolgender Perioden, oder während zweier nicht aufeinanderfolgender Perioden ist.

2. Elektronisches System nach Anspruch 1, bei welchem das elektronische System (100) ein Computersystem ist, und die Lüfterdrehzahlsteuerschaltung (104) ein Baseboard Management Controller ist.

3. Elektronisches System nach Anspruch 2, bei welchem der Baseboard Management Controller dazu ausgebildet ist, die sichere Lüfterdrehzahl einzustellen, bevor die Lüftersteuerung die Diskrepanz erkennt.

4. Elektronisches System nach einem der Ansprüche 1 bis 3, bei welchem die sichere Lüfterdrehzahl geringer als die volle Drehzahl ist.

5. Elektronisches System nach einem der Ansprüche 1 bis 4, bei welchem die sichere Lüfterdrehzahl beim Anlaufen des Computersystems, beim Rücksetzen des Computersystems oder bei beidem eingestellt wird.

6. Verfahren zum Steuern eines Lüfters (108) eines elektronischen Systems (100) nach Anspruch 1, wobei das Verfahren die folgenden Schritte aufweist:
Überwachen eines Heartbeat-Signals, das den normalen Betrieb des elektronischen Systems (100) angibt;
Erkennen einer Diskrepanz in dem Heartbeat-Signal; und
Steuern des Lüfters (108) gemäß einer sicheren Lüfterdrehzahl in Reaktion auf die Diskrepanz.

7. Verfahren nach Anspruch 6, bei welchem das elektronische System (100) ein Computersystem ist, und die Lüfterdrehzahlsteuerschaltung (104) ein Baseboard Management Controller ist.

8. Verfahren nach Anspruch 6 oder 7, ferner mit dem Einstellen der sicheren Lüfterdrehzahl durch die Lüfterdrehzahlsteuerschaltung (104) vor dem Erkennen der Diskrepanz.

9. Verfahren nach einem der Ansprüche 6 bis 8, bei welchem die sichere Lüfterdrehzahl geringer als die volle Drehzahl ist.

10. Verfahren nach einem der Ansprüche 6 bis 9, bei welchem die sichere Lüfterdrehzahl beim Anlaufen des Computersystems, beim Rücksetzen des Computersystems oder bei beidem eingestellt wird.

11. Verfahren nach einem der Ansprüche 6 bis 10, ferner umfassend:
Feststellen, dass die Diskrepanz in dem Heartbeat-Signal nicht korrigiert wurde, und Fortsetzen des Steuerns des Lüfters gemäß der sicheren Lüfterdrehzahl in Reaktion auf die Feststellung.

## Revendications

1. Système électronique (100), comprenant :
un circuit de commande de vitesse de ventilateur (104) configuré pour générer un signal de battement de cœur indiquant le fonctionnement normal du circuit de commande de vitesse de ventilateur (104) ; et un signal de commande de vitesse de ventilateur ; et
un module de ventilation (102) comprenant un dispositif de commande de ventilateur (106) et un ventilateur (108),
dans lequel le circuit de commande de vitesse de ventilateur (104) est connecté de manière communicative au dispositif de commande de ventilateur (106) du module de ventilateur (102) par l'intermédiaire d'une connexion câblée (110) et est configuré pour communiquer le signal de commande de vitesse de ventilateur et le signal de battement de cœur au dispositif de commande de ventilateur (106) par l'intermédiaire de la connexion câblée (110),
le dispositif de commande de ventilateur (106) est configuré pour faire fonctionner le ventilateur (108) à la vitesse indiquée dans le signal de commande de vitesse de ventilateur, et
le dispositif de commande de ventilateur étant en outre configuré pour détecter une anomalie dans le signal de battement de cœur et commander le ventilateur (108) selon une vitesse de ventilateur sûre, en réponse à l'anomalie détectée,
**caractérisé en ce que**
le signal de battement de cœur est intégré dans un signal de commande de vitesse de ventilateur, et le signal de battement de cœur est transmis sur la même broche de sortie générale que le signal de commande de vitesse de ventilateur,
dans lequel le signal de battement de cœur est une modulation périodique de largeur d'impulsion dans le signal de commande de vitesse de ventilateur, et l'anomalie est une absence de signal de battement de cœur pendant au moins une période, pendant deux périodes séquentielles, ou pendant deux périodes non séquentielles.

2. Système électronique selon la revendication 1, dans lequel le système électronique (100) est un système informatique, et le circuit de commande de vitesse de ventilateur (104) est un dispositif de commande de gestion de carte de base.

3. Système électronique selon la revendication 2, dans lequel le dispositif de commande de gestion de carte de base est configuré pour définir la vitesse de sécurité de ventilateur avant que le dispositif de commande de ventilateur ne détecte l'anomalie.

4. Système électronique selon l'une quelconque des revendications 1 à 3, dans lequel la vitesse de sécurité du ventilateur est inférieure à la vitesse maximale.

5. Système électronique selon l'une quelconque des revendications 1 à 4, dans lequel la vitesse sûre du ventilateur est réglée au démarrage du système informatique, à la réinitialisation du système informatique, ou aux deux.

6. Procédé de commande d'un ventilateur (108) d'un système électronique (100) selon la revendication 1, le procédé comprend :
la surveillance d'un signal de battement de cœur indiquant le fonctionnement normal du système électronique (100) ;
la détection d'une anomalie dans le signal de battement de cœur ; et
la commande du ventilateur (108) selon une vitesse de ventilateur sûre en réponse à l'écart.

7. Procédé selon la revendication 6, dans lequel le système électronique est un système informatique, et le circuit de commande de vitesse de ventilateur (104) est un dispositif de commande de gestion de carte de base.

8. Procédé selon la revendication 6 ou 7, comprenant en outre le réglage de la vitesse de sécurité de ventilateur par le circuit de commande de vitesse de ventilateur (104) avant la détection de l'anomalie.

9. Procédé selon l'une quelconque des revendications 6 à 8, dans lequel la vitesse de sécurité de ventilateur est inférieure à la vitesse maximale.

10. Procédé selon l'une quelconque des revendications 6 à 9, dans lequel la vitesse de rotation sûre du ventilateur est définie au démarrage du système informatique, à la réinitialisation du système informatique, ou aux deux.

11. Procédé selon l'une quelconque des revendications 6 à 10, comprenant en outre :
la détermination que l'anomalie du signal de battement de cœur n'a pas été corrigée et la poursuite de la commande du ventilateur selon la vitesse sûre de ventilateur, en réponse à la détermination.
